Europäisches Patentamt

European Patent Office   (11) Publication number: **0 220 766**

Office européen des brevets   **A1**

(12)   # EUROPEAN PATENT APPLICATION

(21) Application number: **86201761.3**   (51) Int. Cl.⁴: **B29D 30/48**

(22) Date of filing: **13.10.86**

(30) Priority: **18.10.85 GB 8525715**

(43) Date of publication of application:
**06.05.87 Bulletin 87/19**

(84) Designated Contracting States:
**AT BE CH DE ES FR GB IT LI LU NL SE**

(71) Applicant: **N.V. BEKAERT S.A.**
**Bekaertstraat 2**
**B-8550 Zwevegem(BE)**

(72) Inventor: **Dambre, Paul**
**Lokerstraat 6**
**B-8948 Kemmel(BE)**

(54) **Steel cord with high corrosion fatigue resistance.**

㊗ A steel wire element for the reinforcement of vehicle tyres or other rubber products. The corrosion fatigue resistance is improved by avoiding any residual chlorine on the steel surface of the wire.

FIG.2

## STEEL CORD WITH HIGH CORROSION FATIGUE RESISTANCE

The invention relates to a steel wire element for use in the reinforcement of rubber products, for example, of tyres, conveyor or timing belts, hoses and like products.

Such steel wire element may for example be a single steel wire, or any structure, such as a twisted or woven structure, comprising steel wires. Most frequently, steel wire elements for use in the reinforcement of rubber products are in the form of steel cord, which is a bundle of steel wires kept together by the intertwisting of some or all of them.

For use in the reinforcement of rubber products, the wire conveniently has a thickness of 0.05 to 0.80 mm, preferably not more than 0.40 mm (e.g. 0.15 or 0.25 or 0.38 mm), the thickness being the diameter of the circle having the surface area of the cross-section of the wire. For its use in the reinforcement of rubber products, such steel wire has a tensile strength of at least 2000 Newton per square millimeter, and an elongation at rupture of at least 1 %, preferably at least 2 %. In order to procure the necessary adhesion to rubber for reinforcement purposes (shearing resistance at the rubber-wire interface of at least 5 Newton per square millimeter), the wire element is provided with a coating which promotes the adherence of the wire element, such as a coating of copper, zinc, brass or ternary brass alloy, or a combination of such coatings. The coating may also be in the form of a thin film of a chemical material for ensuring good rubber penetration and adhesion.

A rubber adherent brass alloy coating conveniently comprises a copper content in the range of 58 to 75 % of copper, preferably 67 to 72 %, the remainder being zinc and possible other alloying elements such as cobalt or nickel, and has a thickness ranging from 0.05 to 0.40 micron, preferably from 0.12 to 0.22 micron. The coating may be applied to the overall external surface of the element which has to contact the rubber or, more frequently, to the external surface of each reinforcing wire in the element.

For rubber products reinforced with such steel elements and used in conditions where moisture can penetrate towards the wires, it has been observed that the fatigue resistance of the reinforcement is strongly reduced in comparison with the use in dry conditions. When inspecting the broken wires, it appears that the fatigue rupture is initiated at locations where the steel starts to corrode by the infiltrating $H_2O$. This phenomenon is called "corrosion fatigue" and hence that it has been tried to avoid this by avoiding any infiltration of $H_2O$ from or through the rubber and through the wire coating towards the steel surface of the wire.

The invention is based on the observation that the corrosion fatigue resistance is strongly improved, when the steel surface of the wire is kept substantially free from chlorine. Chlorine is an impurity which is not avoidable in the production of steel wire for rubber reinforcement, if no special measures are taken. But when making the invention, such measures were taken in order to see the effect.

The steel wire element according to the invention is consequently characterized by the fact that it comprises steel wire having on its steel surface a presence of chlorine resulting into a chlorine K-alpha peak of the first order, the height of said chlorine K-alpha peak being less than $4 \times 10^{-3}$ times the height of the iron K-alpha peak of the first order, both peaks as measured by the standard X-ray fluorescence test. The standard X-ray fluorescence test is described below. The invention further procures rubber products reinforced with a steel wire element of the type above.

An X-ray fluorescence test was developed in order to measure the chlorine residuals at the steel surface of the steel wire. The X-ray fluorescence test comprises the following steps:

1. Cleaning the surface of the steel wire element
2. Taking away the coating of the steel wire element
3. Measuring the chlorine/iron ratio by X-ray fluorescence. The surface of the steel wire element to be measured is cleaned by dipping the steel wire element into demineralized water and by subjecting it during five minutes to ultrasonic vibrations. The steel wire element is then dried in alcohol and further dried with a heating element.

The coating of the steel wire element is taken away by pickling the steel wire element into a mixture of ammonia and ammonium per sulphate and by subjecting it during five minutes to ultrasonic vibrations. The steel wire element is then rinsed with demineralized water, dried in alcohol and further dried with a heating element.

The chlorine/iron ratio is measured by X-ray fluorescence. The apparatus used is the automatic sequential spectrometer PW 1404/00/10 of Philips. This apparatus is described in the service manual having number 850211, first edition, February 1985. The steel wire elements to be measured are put on a copper plate which is free of chlorine and are held together with this copper plate by a magnet. The spinner of the apparatus is in, this means that the steel wire elements together with the copper plate and the magnet are rotating during the measurement. In this manner a mean value is measured. The apparatus has a gold-chromium tube. No tube filter is used. A channel mask of 24 mm is chosen. The medium for the X-rays is helium. A gas flow detector is used. For the measurement of the chlorine peak the tube has a voltage of 40 kV and a current of 60 mA ; a coarse collimator and a crystal of penta erythrite are used. For the measurement of the iron peak the tube has a voltage of 30 kV and a current of 10 mA ; a fine collimator and a crystal of lithium fluoride 200 are used. The chlorine K-alpha peak of the first order lies not far from a diffraction angle of 65.5 degrees, the iron K-alpha peak of the first order lies not far from a diffraction angle of 57.5 degrees.

In what follows the above described X-ray fluorescence test is called the standard X-ray fluorescence test.

In conventional processes for making steel wire for rubber reinforcement, there are the pickling operations, in general in HCl, and the electroplating operations and rinsing in non-demineralized water which result into leaving a steel surface with absorbed residual chlorine ions. There are further the wire-drawing operations in soap baths which are not kept free from chlorine ions, because no need was felt, and which chlorine ions come either from the water, or from the lubricant, or from the residue on the surface of the wire entering the bath.

The result is at any rate that the height of the chlorine K-alpha peak of the first order is at least $5 \times 10^{-3}$ times the height of the iron K-alpha peak of the first order, both peaks as measured by the standard X-ray fluorescence test.

It appears however that it is precisely this residual chlorine that has to be avoided as much as possible in order to improve the resistance against corrosion fatigue and that the level of residual chlorine must be brought far below this $5 \times 10^{-3}$ ratio. The explanation is based on the theory that corrosion fatigue crack initiation is due to hydrogen atoms, coming from the corrosion reaction of Fe with $H_2O$, that are attracted towards stress peak locations, occurring at the edges of surface imperfections, formed by corrosion. At these locations, the hydrogen atoms can more easily penetrate into the Fe-crystal lattice where they produce the stress that initiates the fatigue crack. It is now believed that chlorine, even in small amounts, acts as a catalyser for the corrosion reaction $Fe + H_2O \rightarrow FeO + H_2$, by means of an intermediate formation of FeCl , which reacts more rapidly with water via the reaction $FeCl_2 + H_2O \rightarrow FeO + H_2 + Cl_2$. If now this catalytic reaction is avoided, then not only less hydrogen is formed, but also less surface imperfections with their stress peaks where the hydrogen can infiltrate into the crystal lattice. This is confirmed by the fact that such wire with better corrosion fatigue behaviour also shows no, or much less corrosion surface imperfections when inspected under the microscope. The slower corrosion reaction also slows down the deterioration of the adhesion in rubber during the lifetime of the rubber product.

As a consequence, the chlorine content of the steel surface of the wires used in the invention must be drastically reduced, so that that the height of the chlorine K-alpha peak of the first order is less than $5 \times 10^{-3}$, preferably less than $4 \times 10^{-3}$, and most preferably less than $3 \times 10^{-3}$ times the height of the iron K-alpha peak of the first order, both peaks as measured by the standard X-ray fluorescence test.

The chlorine-free wire can be made, for instance in the manner as follows. Starting from patented wire rods of 5,5 mm diameter, these rods are firstly cleaned from oxides at the surface by mechanical descaling and chemical pickling in a $H_2SO_4$ solution in chlorine free water, and not in a HCl solution. The wire rods are then rinsed in chlorine free water. Tap water from the drinkable town water distribution system is to be avoided because it is in general disinfected with chlorine containing additives. Demineralized water is preferred. After drying, the wire rods are drawn in dry state towards a diameter of about 1.5 mm, on a conventional wire drawing machine using a chlorine-free lubricant, such as a conventional stearate soap. Subsequently, the wire is submitted to a well-known intermediate patenting operation in a continuous austenitizing furnace under $CO + CO_2$ athmosphere followed by continuous quenching in a lead bath. On exit from the lead bath, the wire is submitted to a continuous chemical or electrolytical pickling operation, not in HCl, but in a chlorine-free aqueous solution of $H_2SO_4$. The wire is then rinsed in chlorine-free water.

Then the wire is covered with a brass coating of about 67 % Cu and 33 % Zn in a well-known way : electrolytic plating in an aqueous $CUSO_4$-bath followed by electrolytic plating in an aqueous $ZnSO_4$ bath, followed by thermodiffusion by heating to a temperature of 450 -600°C for a few seconds. Both aqueous baths have to be chlorine free, and also the water rinsing baths after each plating bath, by taking the precautions as described above. Next comes the wet drawing operation of the plated wire towards its final diameter of e.g. 0.23 mm, in a conventional liquid lubricant, which normally is chlorine free, when diluted in chlorine free water. Care must be taken however, that the bath be not contaminated with chlorine coming from a previous drawing operation in which chlorine contaminated wire had entered the bath.

Although the processes for producing steel wire in general do not contain the risk of obtaining a similarly detrimental equivalent of chlorine, such as bromine, on the surface of the steel, care shall be taken however, if necessary, to eliminate any specific process which would bring any bromine or other equivalent into contact with the wire during the processing.

The rubber products comprising a steel wire element according to the invention are then obtained by introducing such wires, either individual or in woven or cord form or any other form in an unvulcanized rubber composition and then vulcanizing the whole. In general, the wire element is firstly impregnated in an adhesion rubber composition, and care must be taken that this adhesion rubber doesnot comprise any chlorine containing additives. Such adhesion rubber will conveniently comprise 40 to 70 parts of carbon black per 100 parts of rubber, 2 to 6 parts of coumarone resin, 4 to 12 parts of zinc oxide and 1 to 5 parts of sulphur, and further not more than 10 parts in total of antioxidant or accelerator or other agents, all parts being by weight.

The invention is particularly applicable to rubber tyres where a high fatigue resistance and a long duration of the adhesion is required. The steel wire element will preferably be used in the belt or carcass plies of the tyre. The reinforcing elements are then in general in the form of cord, such as a twisted 2x1 or 4x1, or a 2+2-cord structure for passenger car tyres, or a 3+9, 3+9+15 or 27x1-cord structure for truck tyres, or a 7x7 or 49x1-cord structure for off the road tyre applications. They can also be in the form of single wires, located side by side in a reinforcing rubber ply. For making such reinforcing rubber ply, individual wires or cords are laid side by side to form a foil of one or more suspended layers of wires or cords and this foil is covered on either side with a foil of unvulcanized adhesion rubber which enters between and/or into the cords and wires of the intermediate steel wire foil. The whole is cut into strips and the result is a strip of cord or wire pieces, lying side by side in one or more superposed layers, and impregnated with unvulcanized adhesion rubber. Such strips, with wire elements according to the invention and impregnated in chlorine-free adhesion rubber, are also part of the invention.

Figure 1 shows a result of the standard X-ray fluorescence test of a steel wire element of the prior art.

Figure 2 shows a result of the standard X-ray fluorescence test of a steel wire element according to the invention.

As an example a steel wire element of the prior art is compared with a steel wire element according to the invention. Both steel wire elements have the same structure, namely 3 + 9 x 0,20 +1 and are super high tensile steel cords. The difference between both steel wire elements lies in the process for making. The process for making this steel wire element of the prior art comprises pickling operations in HCl, whereas in the process for making the steel wire element according to the invention all the above mentioned measures are taken in order to avoid as much as possible chlorine residuals.

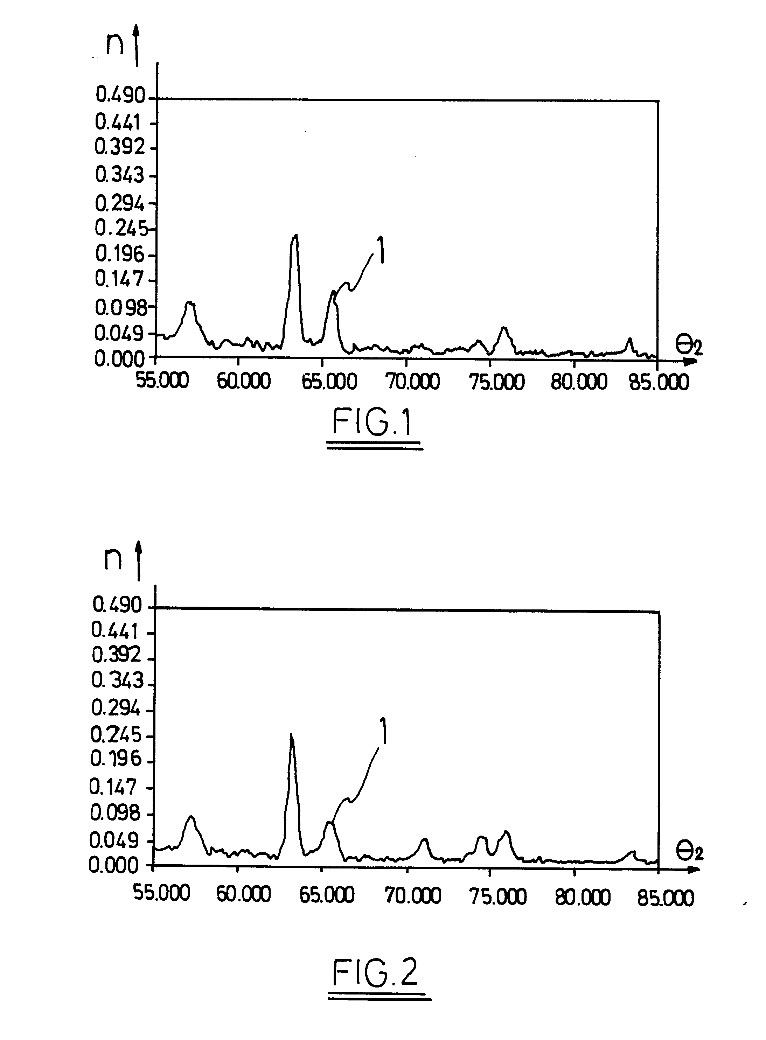

Figure 1 shows the measurement of the chlorine K-alpha peak of the first order of the steel wire elements of the prior art. The number n of kilo counts per second is plotted versus the diffraction angle $\theta_2$ - (two-theta). The chlorine K-alpha peak of the first order is indicated by 1 (the great peak at the left side of 1 is a chromium peak). An intensity of 0.134 kcps (kilo counts per second) is measured at 65.640 degrees. An intensity of 26.5175 kcps is measured at 57.550 degrees for the iron (K-alpha peak of the first order (not on this figure). The height of the chlorine peak is thus $5.05 \times 10^{-3}$ times the height of the above mentioned iron peak. For other steel wire elements of the prior art this ratio of the chlorine peak versus the iron peak is much higher than $5 \times 10^{-3}$.

Figure 2 shows the measurement of the chlorine K-alpha peak of the first order of the steel wire element according to the invention. The chlorine K-alpha peak of the first order is indicated by 1. An intensity of 0.086 kcps is measured at 65.422 degrees. An intensity of 25.0185 kcps is measured at 57.550 degrees for the iron K-alpha peak of the first order (not on this figure). The height of the chlorine peak is thus $3.44 \times 10^{-3}$ times the height of the above mentioned iron peak.

The advantages of the invention can be derived from a conventional Hunter fatigue test, as developed by the Hunter Spring Company, Lansdale, Pennsylvania, and explained in the article of F.A. Votta "New wire fatigue testing method" (Iron Age, August 26, 1948) and in U.S. Patent No. 2.435.772. The tested wire piece is bent with such curvature, that it undergoes, in the middle of the axially running line of greatest distance from the axially extending neutral plane, a predetermined tensile stress of A Newton/mm². The wire is then rotated around its own incurved axis, so that each point of the circumference of the cross-section in the middle of the wire piece cyclically varies between +A and -A Newton/mm² tensile stress. The number of cycli before rupture is counted. One wire sample is tested by testing a number n of pieces of the sample, each bent to a different level of tensile stress $A_1, A_2, A_3 \ldots A_n$, these stresses forming an arithmetical series. The test is run for all wires pieces, and the highest stress $A_x$ for which the wire piece which was bent to such stress, doesnot break after 540.000 cycli, is called the fatigue resistance (in Newton/mm²) of the sample. The dry fatigue resistance is measured when the tests are conducted with dry wires, and the corrosion fatigue resistance is measured when the tests are conducted with the wire submerged in water.

Care must be taken that this water be demineralized in order to simulate the corrosion in the chlorine free rubber product, where water molecules, coming from condensation of humid air, diffuse through the rubber, without any minerals. As long as the wire was not chlorine-free before, this demineralization of the water for the test was without any importance.

Table 1 gives the results of the standard X-ray fluorescence test and of the corrosion fatigue test on two steel wire elements having the structure 3 + 9 x 0,19 + 1.

*Table 1*

| sample | height of the chlorine K-alpha peak of the first order divided by the height of the iron K-alpha peak of the first order | corrosion fatigue resistance $(N/mm^2)$ |
|---|---|---|
| 1 | $4.19 \times 10^{-3}$ | 475 |
| 2 | $1.62 \times 10^{-3}$ | 625 |

In both examples the dry fatigue resistance lies in the range 1250 -1350 N/mm².

Generally if the above mentioned ratio of the chlorine peak versus the iron peak is less than $4 \times 10^{-3}$ then the corrosion resistance is higher than 400 N/mm², if the ratio of the chlorine peak versus the iron peak is less than $3 \times 10^{-3}$ then the corrosion resistance is higher than 500 N/mm² and if the ratio of the chlorine peak versus the iron peak is less than $2 \times 10^{-3}$ then the corrosion resistance is higher than 600 N/mm².

The corrosion resistance of steel wire elements of the prior art is less than 400 N/mm², usually less than 350 N/mm².

It is clear that the invention can be combined with other measures to supply fatigue resistance (such as the alternating bendings used for the samples of the test above), and more specifically to supply corrosion fatigue resistance. In this respect, measures can be taken to obtain a more compact brass coating for better preventing any permeability as explained in the European Patent Application No. 85201605.4 : by inserting a wire drawing operation between the electroplating operations of copper and zinc and the thermodiffusion operation.

The steel for reinforcement of rubber products is in general a ferritic steel of a composition inside the range of 0.7 -0.9 % carbon, 0.30 -0.7% manganese and 0.10 -0.35 % silicon, the sulphur and phosphor impurities not exceeding 0.05 % in total. Such steel is then heat treated for obtaining a fine lamellar pearlitic structure, and then hard drawn in order to obtain a high tensile strength above 2000 Newton/mm². For reinforcement of rubber tyres, the hard drawn lamellar pearlitic structure will preferably have an average interlamellar distance (i.e. the thickness of the ferrite layer between the cementite lamellae), in the range from 0.020 to 0.028 micron, preferably about 0.024. And for high-tensile reinforcement wires for rubber tyres, the wire will preferably have a tensile strength, in function of the final wire thickness of more than 2250 -1130 log d Newton per square millimeter, d being the wire thickness in millimeter.

The invention is not limited by the shape of the wire cross-section for the steel wires used in the invention, round wires can be used, but also wires with non-circular cross-section, such as oval or flattened or rectangular cross-sections with a width-to-thickness ratio of 1 to 20, preferably 4 to 10.

## Claims

1. A steel wire element for use in the reinforcement of rubber products, characterized by the fact that it comprises steel wire having on its steel surface a presence of chlorine resulting into a chlorine K-alpha peak of the first order, the height of said chlorine K-alpha peak being less than $4 \times 10^{-3}$ times the height of the iron K-alpha peak of the first order, both peaks as measured by the standard X-ray fluorescence test.

2. A steel wire element according to claim 1 characterized by the fact that the height of said chlorine K-alpha peak is less than $3 \times 10^{-3}$ times the height of the iron K-alpha peak of the first order.

3. A steel wire element according to claim 1 or claim 2, characterized by the fact that the surface of said steel wire is covered by a brass alloy coating.

0 220 766

4. A steel wire element according to any one of claims 1 to 3, characterized by the fact that said steel wire element is in the form of a cord.

5. A rubber product reinforced with a steel wire element, characterized by the fact that said steel wire element is an element according to claim 1.

6. A rubber product according to claim 5, characterized by the fact that it is in the form of a tyre and that said steel wire element is located in a belt or carcass ply of the tyre.

6

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 300 957 (MARENCAK et al.)<br>* Column 1, lines 1-28 * | 1,3-6 | B 29 D 30/48 |
| Y | US-A-2 154 834 (DE LAMETTER)<br>* Column 1, lines 7-25 * | 1 | |
| Y | L. L. SHREIR: "Corrosion", vol. 1, chapter 8, 1976, 2nd edition, Butterworth, London, GB; "Effect of mechanical factor on corrosion"<br>* Pages 8:96-8:97,8:3-8:8 * | 1,3-6 | |
| Y | CORROSION SCIENCE, vol. 20, 1980, pages 1143-1155, Pergamon Press, GB; G. T. BURSTEIN et al.: "The effects of anions on the behaviour of scratched iron electrodes in aqueous solutions"<br>* Figure 3, pages 1152-1154 * | 1,3-6 | TECHNICAL FIELDS SEARCHED (Int. Cl.4)<br><br>B 29 D<br>B 21 C<br>C 23 G<br>C 25 D |
| A | DERWENT JAPANESE PATENTS GAZETTE, Derwent Publications, Section Chemical, A14, Week D52, Accession no. 95559 D/52, 10th February 1982; & JP-A-56 145 339 (NISSIN STEEL KK) 12-11-1981 | 1,2 | |
| A | US-A-3 563 074 (AVALLONE)<br><br>* Column 1, lines 31-64 *<br><br>--- -/- | | |

The present search report has been drawn up for all claims

| Place of search | Date of completion of the search | Examiner |
|---|---|---|
| THE HAGUE | 23-01-1987 | ASHLEY G.W. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-2 387 335 (LEONARD) <br><br> * Column 1, lines 26-29; column 2, lines 6-13 * <br><br> --- | | |
| A | PATENTS ABSTRACTS OF JAPAN, vol. 6, no. 246 (M-176)[1124], 4th December 1982; & JP-A-57 144 105 (BRIDGESTONE TIRE K.K.) 06-09-1982 <br><br> --- | | |
| A | PATENTS ABSTRACTS OF JAPAN, vol. 6, no. 17 (M-109)[895], 30th January 1982; & JP-A-56 135 052 (KURASHIKI KAKOU K.K.) 22-10-1981 <br><br> ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 23-01-1987 | ASHLEY G.W. |